(19) Europäisches Patentamt
European Patent Office
Office européen des brevets

(11) **EP 2 775 646 A1**

(12) **EUROPEAN PATENT APPLICATION**
published in accordance with Art. 153(4) EPC

(43) Date of publication:
**10.09.2014 Bulletin 2014/37**

(51) Int Cl.:
***H04J 99/00*** *(2009.01)*     ***H04B 7/04*** *(2006.01)*

(21) Application number: **12845420.4**

(22) Date of filing: **02.11.2012**

(86) International application number:
**PCT/JP2012/078468**

(87) International publication number:
**WO 2013/065820 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **04.11.2011 JP 2011242910**

(71) Applicant: **NTT DOCOMO, INC.**
**Chiyoda-ku**
**Tokyo 100-6150 (JP)**

(72) Inventors:
• **SAGAE, Yuta**
**Tokyo 100-6150 (JP)**
• **OHWATARI, Yusuke**
**Tokyo 100-6150 (JP)**
• **MIKI, Nobuhiko**
**Tokyo 100-6150 (JP)**
• **ABE, Tetsushi**
**Tokyo 100-6150 (JP)**

(74) Representative: **HOFFMANN EITLE**
**Patent- und Rechtsanwälte**
**Arabellastrasse 4**
**81925 München (DE)**

(54) **RECEIVER**

(57)     The IRC receiver 10 according to the present invention includes a channel estimation unit 11 that performs a channel estimation process so as to estimate a channel matrix H, a transmission weight matrix generation unit 13 that generates a transmission weight matrix $W_{Tx}$, a covariance matrix estimation unit 12 that estimates an interference signal covariance matrix (I) including a covariance matrix $R_{I+N}$ and an interference signal component on the basis of CRS, an IRC reception weight generation unit 14 that generates an IRC reception weight $W_{IRC}$ on the basis of the channel matrix H, the transmission weight matrix $W_{Tx}$, and the covariance matrix $R_{I+N}$, and a received SINR estimation unit 15 that estimates received SINR on the basis of the channel matrix H, the interference signal covariance matrix (I), the transmission weight matrix $W_{Tx}$, and the IRC reception weight $W_{IRC}$.

FIG. 1

**Description**

[Technical Field]

The present invention relates to a receiver.

[Background Art]

In an LTE (Long Term Evolution) scheme, in a downlink, as one of methods of improving cell-edge throughput, an IRC (Interference Rejection Combining) receiver is discussed which suppresses a beam of another mobile station UE causing interference.

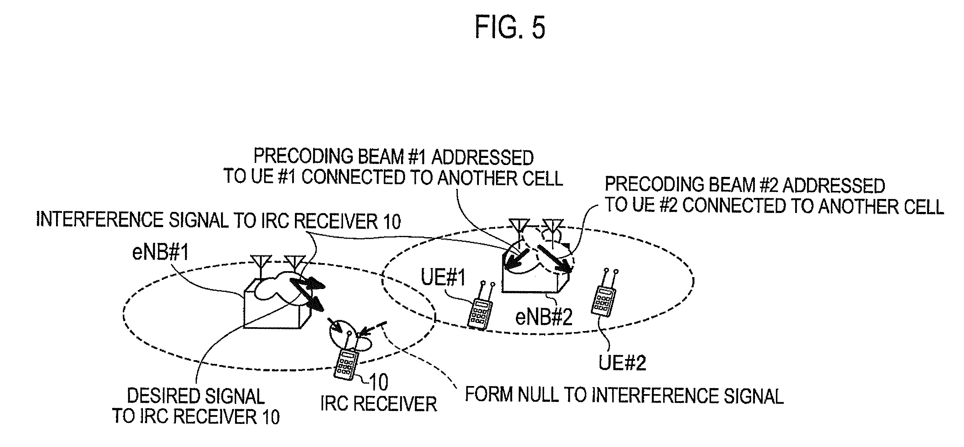

As illustrated in Fig. 5, an object of an IRC receiver 10 is to improve the reception quality of a desired signal while suppressing an interference signal.

Furthermore, in an LTE (Release-8) scheme, in order to estimate a channel state (CSI: Channel State Information), to demodulate a data signal and a control signal, and to measure reception quality in a cell, CRS (Cell-Specific Reference Signal) is configured to be transmitted.

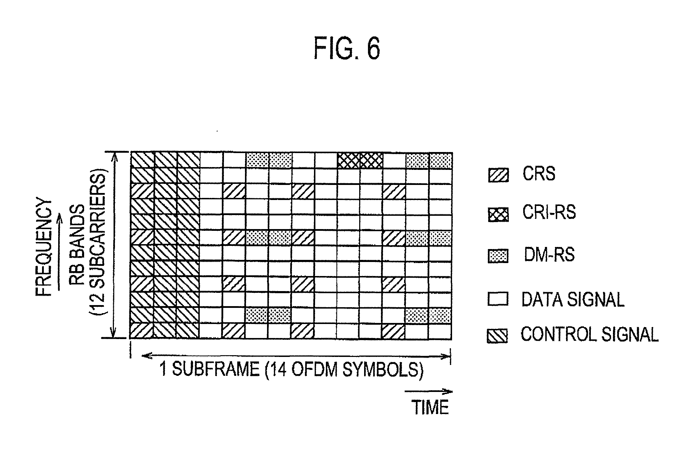

Specifically, in the LTE (Release-8) scheme, the CRS is configured to be transmitted together with a data signal and a control signal by a configuration illustrated in Fig. 6. It is noted that it is possible to set the CRS to a maximum of four antennas.

Furthermore, in an LTE (Release-10) scheme, in addition to the CRS, CSI-RS (Channel State Information-Reference Signal) and DM-RS (Demodulation-Reference Signal/UE Specific-Reference Signal) are configured to be transmitted.

Since the CSI-RS is considered to be used only for the estimation of the CSI, the CSI-RS is configured to be transmitted at low density as compared with the CRS. It noted that it is possible to define the CSI-RS to a maximum of eight antennas.

Furthermore, when the DM-RS is transmitted similarly to the data signal (that is, when channel estimation after precoding is enabled), it becomes possible to demodulate the data signal without using the precoding information. It is noted that it is possible to set the DM-RS to a maximum of eight stream transmissions.

Specifically, the LTE (release-10) scheme is configured so that the CRS, the CSI-RS, the DM-RS, the data signal, and the control signal are transmitted by the configuration illustrated in Fig. 6.

Furthermore, conventionally, in order to suppress interference, a technology for performing a reception process by using an MMSE (Minimum Mean Square Error) spatial filtering scheme has been known.

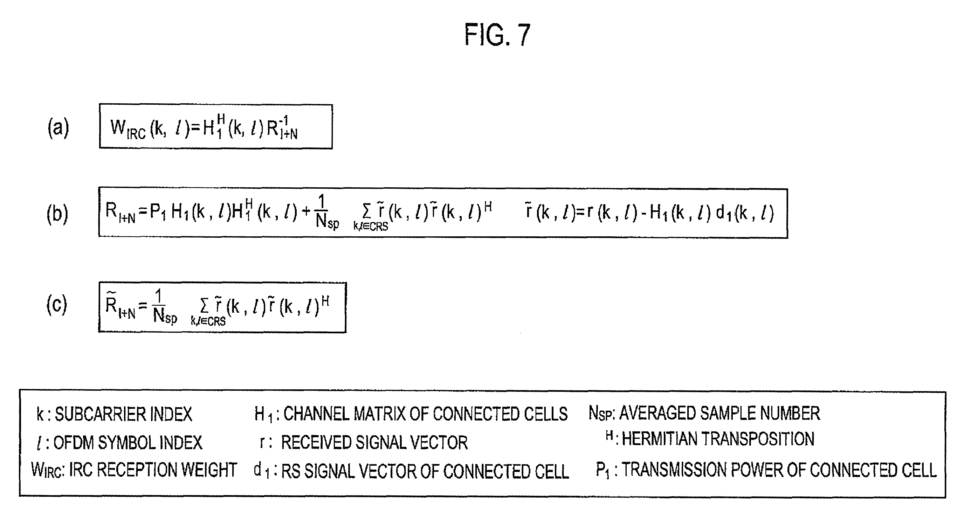

Such a technology is configured to generate an IRC reception weight $W_{IRC}$ (k, 1) as illustrated in Fig. 7(a). Furthermore, when generating the IRC reception weight $W_{IRC}$ (k, 1), a method of estimating a covariance matrix $R_{I+N}$ based on the CRS illustrated in Fig. 7(b) is used (see Non Patent Literature 1).

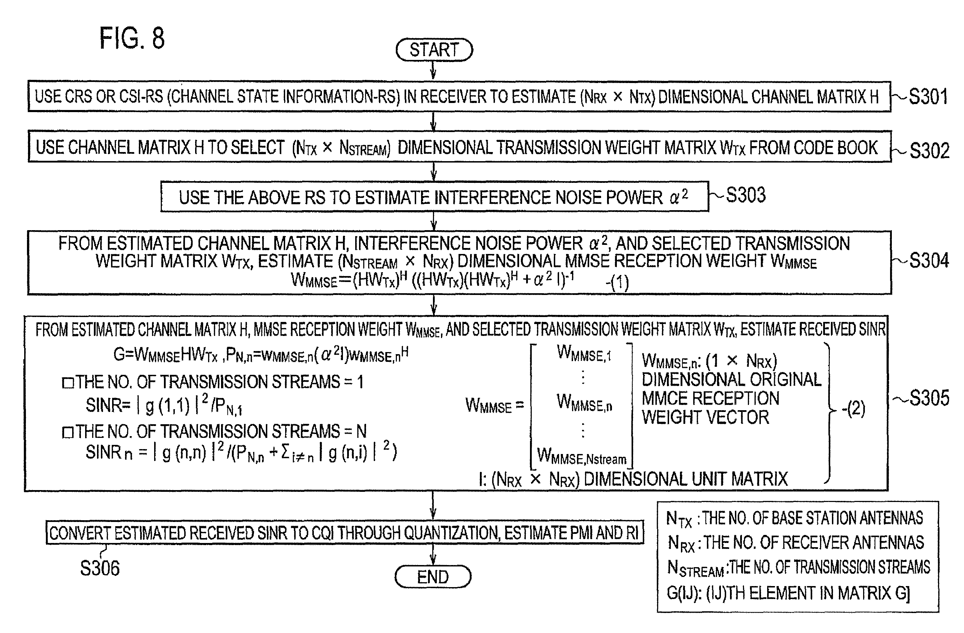

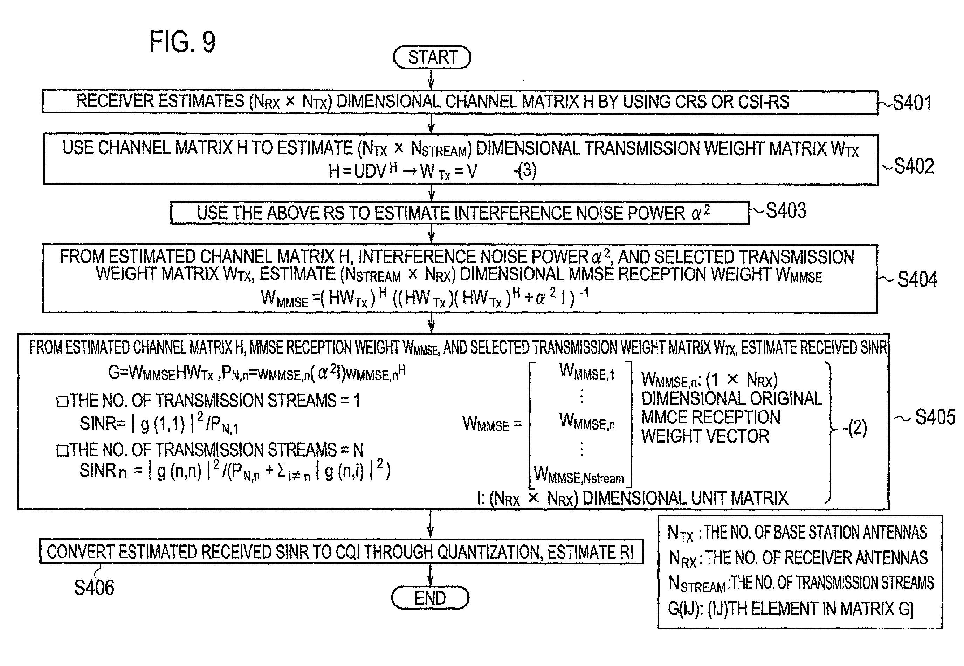

Hereinafter, with reference to Fig. 8 and Fig. 9, a method for calculating the CSI by using such a technology in a conventional receiver that suppresses no inter-cell interference will be described.

Firstly, with reference to Fig. 8, the case in which a transmitter side performs transmission using a codebook will be described.

As illustrated in Fig. 8, in step S301, the receiver estimates an ($N_{RX}$ x $N_{Tx}$) dimensional channel matrix H by using the CRS or the CSI-RS.

In step S302, on the basis of the estimated channel matrix H, the receiver selects an ($N_{Tx}$ x Stream) dimensional transmission weight matrix $W_{Tx}$ from the codebook.

In step S303, the receiver estimates interference noise power $\sigma^2$ by using the aforementioned CRS or CSI-RS.

In step S304, on the basis of the channel matrix H, the interference noise power $\sigma^2$, and the transmission weight matrix $W_{Tx}$, the receiver estimates an ($N_{Stream}$ x $N_{Rx}$) dimensional MMSE reception weight $W_{MMSE}$ by using Equation (1) below.

In step S305, on the basis of the channel matrix H, the MMSE reception weight $W_{MMSE}$, and the transmission weight matrix $W_{Tx}$, the receiver estimates received SINR (Signal-to-Interference plus Noise Ratio) by using Equation (2). Furthermore, the estimated received SINR corresponds to the CSI.

In step S306, the receiver converts the estimated received SINR to CQI (Channel Quality Indicator) through quantization, estimates "PMI (Precoding Matrix Indicator)" that is information indicating a transmission weight on the basis of the estimated received SINR and channel matrix H, and estimates "RI (Rank Indicator)" that is information indicating the number of transmission streams on the basis of the estimated received SINR and the CQI.

Secondly, with reference to Fig. 9, the case in which a transmitter side performs transmission using an arbitrary transmission weight matrix will be described.

As illustrated in Fig. 9, in step S401, the receiver estimates an ($N_{Rx}$ x $N_{Tx}$) dimensional channel matrix H by using the CRS or the CSI-RS.

In step S402, the receiver estimates an ($N_{Tx}$ x $N_{Stream}$) dimensional transmission weight matrix $W_{Tx}$ by using Equation (3) on the basis of the estimated channel matrix H.

Hereinafter, operations in steps S403 to S405 are the same as the operations in the aforementioned steps S303 to S305.

In step S406, the receiver converts the estimated received SINR to CQI through quantization, and estimates "RI (Rank Indicator)" that is information indicating the number of transmission streams on the basis of the estimated received SINR and the CQI.

Moreover, in the case in which no precoding transmission is performed, it is the same as the aforementioned operation illustrated in Fig. 8, except that the ($N_{Tx}$ x $N_{Stream}$) dimensional transmission weight matrix

$W_{Tx}$ is not selected, and the transmission weight matrix $W_{Tx}$ is not used in steps S303 to S305.

In addition, in step S306, the receiver converts the estimated received SINR to the CQI through the quantization, and estimates the "RI (Rank Indicator)" that is information indicating the number of transmission streams on the basis of the estimated received SINR and the CQI.

[Citation List]

[Non Patent Literature]

[NPL 1] 3GPP contribution R4-115213

[Summary of Invention]

However, in the aforementioned CSI calculation method, there is a problem that a gain by the IRC receiver 10 is not reflected.

That is, the aforementioned CSI calculation method considers the receiver that suppresses no inter-cell interference, and assumes the inter-cell interference as white noise to calculate the CSI.

On the other hand, since the IRC receiver 10 is able to effectively suppress the inter-cell interference, received SINR in the IRC receiver 10 is improved as compared with received SINR in the receiver that suppresses no inter-cell interference.

Therefore, when the received SINR in the IRC receiver 10 is estimated by the aforementioned CSI calculation method, the received SINR is estimated to be lower than actual received SINR, resulting in a problem that it is not possible to select appropriate MCS (Modulation and Coding Scheme) with respect to the IRC receiver 10, it is not possible to select the appropriate number of transmission streams, and it is not possible to perform appropriate user scheduling.

Therefore, the present invention has been achieved in view of the above-described problems, and an object thereof is to provide a receiver capable of suppressing inter-cell interference and measuring accurate CSI.

A first characteristic of the present invention is summarized in that a receiver comprising: a channel estimation unit that performs a channel estimation process so as to estimate a channel matrix; a transmission weight matrix generation unit that generates a transmission weight matrix; a covariance matrix estimation unit that estimates an interference signal covariance matrix including a covariance matrix and an interference signal component on the basis of a cell-specific reference signal; a reception weight generation unit that generates a reception weight on the basis of the channel matrix, the transmission weight matrix, and the covariance matrix; and a received quality estimation unit that estimates reception quality on the basis of the channel matrix, the interference signal covariance matrix, the transmission weight matrix, and the reception weight.

[Brief Description of Drawings]

[Fig. 1] Fig. 1 is a functional block diagram of an IRC receiver according to a first embodiment of the present invention.
[Fig. 2] Fig. 2 is a flowchart illustrating an operation of the IRC receiver according to the first embodiment of the present invention.
[Fig. 3] Fig. 3 is a flowchart illustrating the operation of the IRC receiver according to the first embodiment of the present invention.
[Fig. 4] Fig. 4 is a functional block diagram of the IRC receiver according to a first modification of the present invention.
[Fig. 5] Fig. 5 is a diagram for explaining a conventional technology.
[Fig. 6] Fig. 6 is a diagram for explaining a conventional technology.
[Fig. 7] Fig. 7 is a diagram for explaining a conventional technology.
[Fig. 8] Fig. 8 is a diagram for explaining a conventional technology.
[Fig. 9] Fig. 9 is a diagram for explaining a conventional technology.

[Description of Embodiments]

(Mobile communication system according to first embodiment of the present invention)

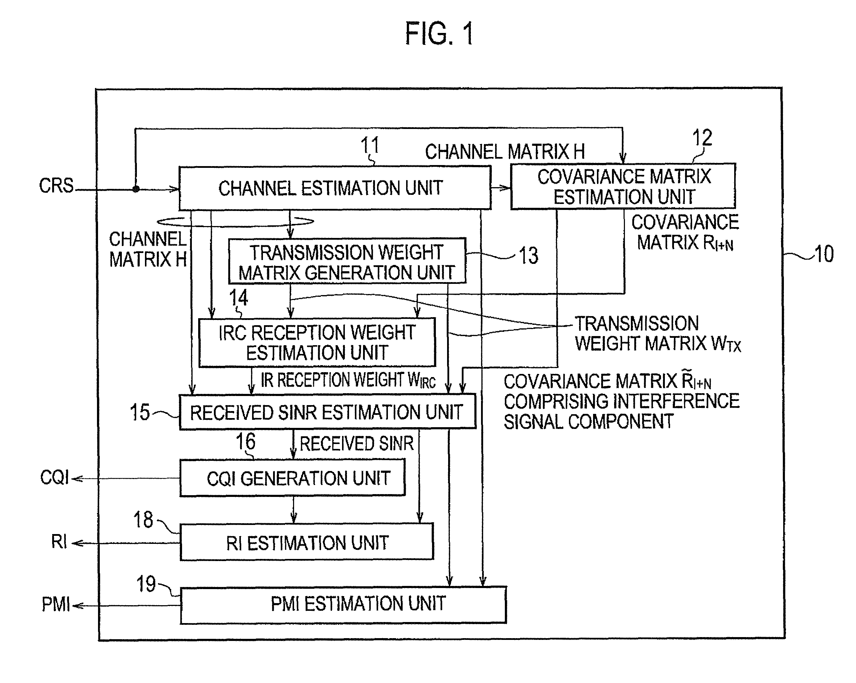

With reference to Fig. 1 to Fig. 3, an IRC receiver 10 according to a first embodiment of the present invention will be described.

As illustrated in Fig. 1, the IRC receiver 10 according to the present embodiment includes a channel estimation unit 11, a covariance matrix estimation unit 12, a transmission weight matrix generation unit 13, an IRC reception weight generation unit 14, a received SINR estimation unit 15, a CQI generation unit 16, an RI estimation unit 18, and a PMI estimation unit 19.

The channel estimation unit 11 is configured to perform a channel estimation process on the basis of CRS received from a serving cell (cell 1) so as to estimate (calculate) a channel matrix H.

The covariance matrix estimation unit 12 is configured to estimate (calculate) an interference signal covariance matrix

[Math. 1]

$$\tilde{R}_{I+N}$$

including a covariance matrix RI+N and an interference signal component (a noise component) on the basis of the CRS and the channel matrix H received from the channel estimation unit 11. Furthermore, the interference signal covariance matrix

[Math. 2]

$$\tilde{R}_{I+N}$$

is to be estimated in Fig. 7(c).

The transmission weight matrix generation unit 13 is configured to generate a transmission weight matrix $W_{Tx}$ on the basis of the channel matrix H received from the channel estimation unit 11.

For example, in the case in which a transmitter side performs transmission using a codebook, the transmission weight matrix generation unit 13 may be configured to select the transmission weight matrix $W_{Tx}$ from the codebook on the basis of the channel matrix H.

Alternatively, in the case in which a transmitter side performs transmission using an arbitrary transmission weight matrix, the transmission weight matrix generation unit 13 may also be configured to generate the transmission weight matrix $W_{Tx}$ on the basis of singular value decomposition precoding assumption.

The IRC reception weight generation unit 14 is configured to generate an IRC reception weight $W_{IRC}$ on the basis of the channel matrix H received from the channel estimation unit 11, the transmission weight matrix $W_{Tx}$ received from the transmission weight matrix generation unit 13, and the covariance matrix $R_{I+N}$ received from the covariance matrix estimation unit 12.

The received SINR estimation unit 15 is configured to estimate (calculate) received SINR on the basis of the channel matrix H received from the channel estimation unit 11, the interference signal covariance matrix

[Math. 3]

$$\tilde{R}_{I+N}$$

received from the covariance matrix estimation unit 12, the transmission weight matrix $W_{Tx}$ received from the transmission weight matrix generation unit 13, and the IRC reception weight $W_{IRC}$ received from the IRC reception weight generation unit 14.

The CQI generation unit 16 is configured to generate CQI on the basis of the received SINR received from the received SINR estimation unit 15.

The RI estimation unit 18 is configured to estimate "RI" that is information indicating the number of transmission streams on the basis of the received SINR received from the received SINR estimation unit 15 and the CQI received from the CQI generation unit 16.

The PMI estimation unit 19 is configured to estimate "PMI" that is information indicating a transmission weight on the basis of the channel matrix H received from the channel estimation unit 11 and the received SINR received from the received SINR estimation unit 15.

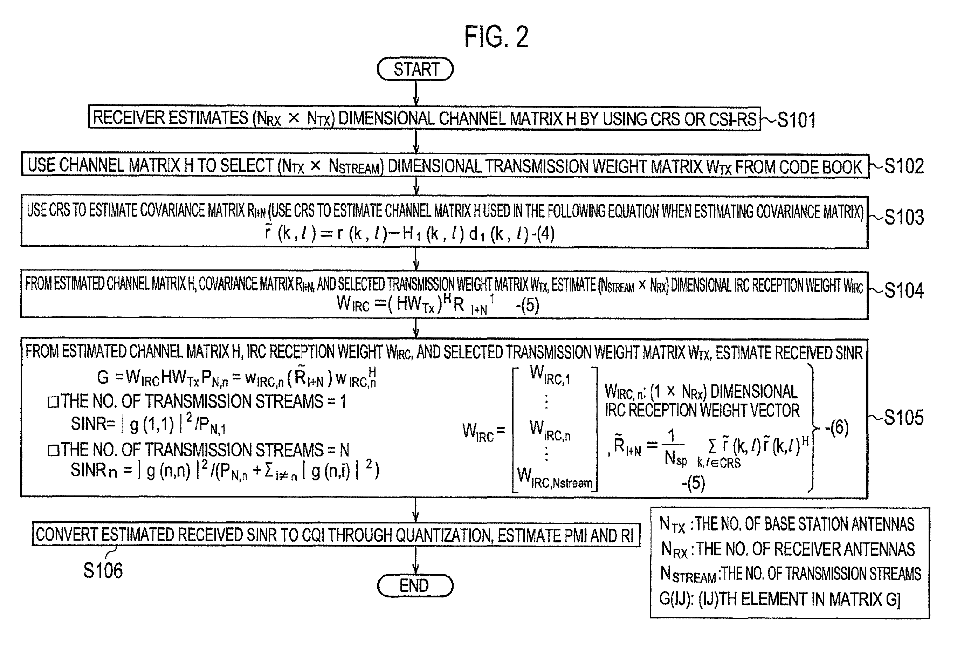

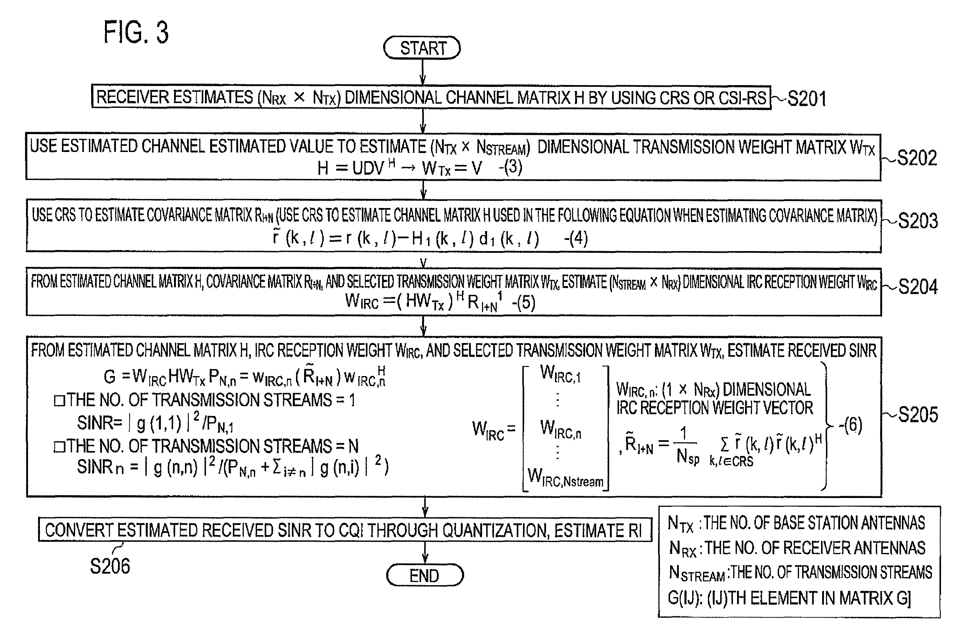

Hereinafter, with reference to Fig. 2 and Fig. 3, a method for calculating the CSI in the IRC receiver 10 according to the present embodiment will be described.

Firstly, with reference to Fig. 2, the case in which a transmitter side performs transmission using a codebook will be described.

As illustrated in Fig. 2, in step S101, the IRC receiver 10 estimates an ($N_{Rx} \times N_{Tx}$) dimensional channel matrix H by using CRS or CSI-RS.

In step S102, on the basis of the estimated channel matrix H, the IRC receiver 10 selects an ($N_{Tx} \times N_{Stream}$) dimensional transmission weight matrix $W_{Tx}$ from the codebook.

In step S103, the IRC receiver 10 estimates a covariance matrix $R_{I+N}$ on the basis of the CRS, the channel matrix H, and the transmission weight matrix $W_{Tx}$ by using Equation (4) (refer to Fig. 7(b)). Furthermore, the IRC receiver 10 estimates an interference signal covariance matrix including an interference signal component

[Math. 4]

$$\tilde{R}_{I+N}$$

(refer to Fig. 7(c)).

In step S104, the IRC receiver 10 estimates an ($N_{Stream} \times N_{Rx}$) dimensional IRC reception weight $W_{IRC}$ by using Equation (5) on the basis of the channel matrix H, the covariance matrix $R_{I+N}$, and the transmission weight matrix $W_{Tx}$.

In step S105, the IRC receiver 10 estimates received SINR by using Equation (6) on the basis of the channel matrix H, the IRC reception weight $W_{IRC}$, and the transmission weight matrix $W_{Tx}$.

In step S106, the IRC receiver 10 converts the estimated received SINR to CQI through quantization, estimates "PMI" that is information indicating a transmission weight on the basis of the estimated received SINR and channel matrix H, and estimates "RI" that is information indicating the number of transmission streams on the basis of the estimated received SINR and the CQI.

Secondly, with reference to Fig. 3, the case in which a transmitter side performs transmission using an arbitrary transmission weight matrix will be described.

As illustrated in Fig. 3, in step S201, the receiver estimates an ($N_{Rx} \times N_{Tx}$) dimensional channel matrix H by using CRS or CSI-RS.

In step S202, the receiver estimates an ($N_{Tx}$ x $N_{Stream}$) dimensional transmission weight matrix $W_{Tx}$ by using Equation (3) on the basis of the estimated channel matrix H.

Hereinafter, operations in steps S203 to S205 are the same as the operations in the aforementioned steps S103 to S105.

In step S206, the IRC receiver 10 converts the estimated received SINR to CQI through quantization, and estimates "RI" that is information indicating the number of transmission streams on the basis of the estimated received SINR and the CQI.

Moreover, in the case in which no precoding transmission is performed, it is the same as the aforementioned operation illustrated in Fig. 2, except that the ($N_{Tx}$ x $N_{Stream}$) dimensional transmission weight matrix $W_{Tx}$ is not selected, and the transmission weight matrix $W_{Tx}$ is not used in steps S103 to S105.

In addition, in step S306, the IRC receiver 10 converts the estimated received SINR to the CQI through the quantization, and estimates the "RI" that is information indicating the number of transmission streams on the basis of the estimated received SINR and the CQI.

According to the IRC receiver 10 according to the present embodiment, when estimating the IRC reception weight $W_{IRC}$, the covariance matrix $R_{I+N}$ based on the CRS is configured to be used. Furthermore, according to the IRC receiver 10 according to the present embodiment, when estimating the received SINR, the interference signal covariance matrix

[Math. 5]

$$\tilde{R}_{I+N}$$

including an interference signal component based on the estimated IRC reception weight $W_{IRC}$ and the CRS is configured to be used.

Consequently, by using the both, so that it is possible to estimate received SINR which reflects an interference suppression effect by the IRC reception weight $W_{IRC}$, and thus it is possible to estimate accurate received SINR in the IRC receiver 10, as compared with the received SINR estimation method in the conventional receiver that suppresses no interference.

(First Modification)

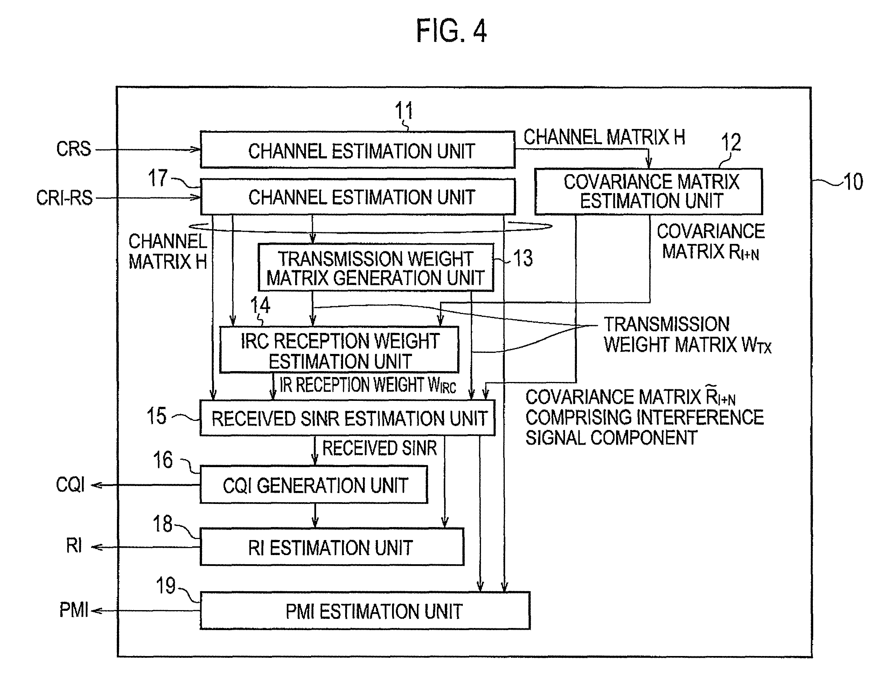

With reference to Fig. 4, the IRC receiver 10 according to a first modification of the present invention will be described. Hereinafter, the IRC receiver 10 according to the present first modification will be described while focusing on differences from the IRC receiver 10 according to the aforementioned first embodiment.

As illustrated in Fig. 4, the IRC receiver 10 according to the present first modification includes a channel estimation unit 17 in addition to the configuration illustrated in Fig. 1.

The channel estimation unit 17 is configured to perform a channel estimation process on the basis of received CST-RS so as to estimate (calculate) the channel matrix H.

In the IRC receiver 10 according to the present first modification, the transmission weight matrix generation unit 13, the IRC reception weight estimation unit 14, and the received SINR estimation unit 15 are configured to use the channel matrix H estimated by the channel estimation unit 17, instead of the channel matrix H estimated by the channel estimation unit 11.

The characteristics of the present embodiment as described above may be expressed as follows.

A first characteristic of the present embodiment is summarized that an IRC receiver 10 includes: a channel estimation unit 11 configured to perform a channel estimation process so as to estimate a channel matrix H; a transmission weight matrix generation unit 13 configured to generate a transmission weight matrix $W_{Tx}$; a covariance matrix estimation unit 12 configured to estimate an interference signal covariance matrix

[Math. 6]

$$\tilde{R}_{I+N}$$

including a covariance matrix $R_{I+N}$ and an interference signal component on the basis of CRS (Cell-Specific Reference Signal); an IRC reception weight generation unit 14 configured to generate an IRC reception weight $W_{IRC}$ on the basis of the channel matrix H, the transmission weight matrix $W_{Tx}$, and the covariance matrix $R_{I+N}$; and a received SINR estimation unit 15 configured to estimate received SINR (reception quality) on the basis of the channel matrix H, the interference signal covariance matrix

[Math. 7]

$$\tilde{R}_{I+N} \qquad ,$$

the transmission weight matrix $W_{Tx}$, and the IRC reception weight $W_{IRC}$.

In the first characteristic of the present embodiment, the transmission weight matrix generation unit 13 may be configured to select the transmission weight matrix $W_{Tx}$ from a codebook on the basis of the channel matrix H.

In the first characteristic of the present embodiment, the transmission weight matrix generation unit 13 may also be configured to generate the transmission weight matrix $W_{Tx}$ on the basis of singular value decomposition precoding assumption.

In the first characteristic of the present embodiment, the transmission weight matrix generation unit 13 may also be configured to generate the transmission weight matrix $W_{Tx}$ on the basis of other arbitrary precoding methods.

In addition, the operation of the above-mentioned IRC receiver 10 may be implemented by hardware, may also be implemented by a software module executed by a processor, or may further be implemented by the combination of the both.

The software module may be arranged in a storage medium of an arbitrary format such as a RAM (Random Access Memory), a flash memory, a ROM (Read Only Memory), an EPROM (Erasable Programmable ROM), an EEPROM (Electronically Erasable and Programmable ROM), a register, a hard disk, a removable disk, or a CD-ROM.

The storage medium is connected to the processor so that the processor can write and read information into and from the storage medium. Such a storage medium may also be accumulated in the processor. Such a storage medium and processor may be arranged in an ASIC. The ASIC may be arranged in the IRC receiver 10. Furthermore, such a storage medium and processor may be arranged in the IRC receiver 10 as discrete components.

Thus, the present invention has been explained in detail by using the above-described embodiments; however, it is obvious that for persons skilled in the art, the present invention is not limited to the embodiments explained herein. The present invention can be implemented as a corrected and modified mode without departing the gist and the scope of the present invention defined by the claims. Therefore, the description of the specification is intended for explaining the example only and does not impose any limited meaning to the present invention.

In addition, the entire content of Japanese Patent Application No. 2011-242910 (filed on November 4, 2011) is incorporated in the present specification by reference.

[Industrial Applicability]

As described above, according to the present invention, it is possible to provide a receiver capable of suppressing inter-cell interference and measuring accurate CSI.

[Reference Signs List]

| | |
|---|---|
| 10 | IRC receiver |
| 11, 17 | Channel estimation unit |
| 12 | Covariance matrix estimation unit |
| 13 | Transmission weight matrix generation unit |
| 14 | IRC reception weight estimation unit |
| 15 | Received SINR estimation unit |
| 16 | CQI generation unit |
| 18 | RI estimation unit |
| 19 | PMI estimation unit |

**Claims**

1. A receiver comprising:

    a channel estimation unit that performs a channel estimation process so as to estimate a channel matrix;
    a transmission weight matrix generation unit that generates a transmission weight matrix;
    a covariance matrix estimation unit that estimates an interference signal covariance matrix including a covariance matrix and an interference signal component on the basis of a cell-specific reference signal;
    a reception weight generation unit that generates a reception weight on the basis of the channel matrix, the transmission weight matrix, and the covariance matrix; and
    a received quality estimation unit that estimates reception quality on the basis of the channel matrix, the interference signal covariance matrix, the transmission weight matrix, and the reception weight.

2. The receiver according to claim 1, wherein the transmission weight matrix generation unit is configured to select the transmission weight matrix from a codebook on the basis of the channel matrix.

3. The receiver according to claim 1, wherein the transmission weight matrix generation unit is configured to generate the transmission weight matrix on the basis of singular value decomposition precoding assumption.

## FIG. 1

CRS $\longrightarrow$

**11** CHANNEL MATRIX H

CHANNEL ESTIMATION UNIT → **12** COVARIANCE MATRIX ESTIMATION UNIT

COVARIANCE MATRIX $R_{I+N}$

CHANNEL MATRIX H

TRANSMISSION WEIGHT MATRIX GENERATION UNIT ~ **13**

**14** IRC RECEPTION WEIGHT ESTIMATION UNIT

TRANSMISSION WEIGHT MATRIX $W_{TX}$

IR RECEPTION WEIGHT $W_{IRC}$

COVARIANCE MATRIX $\widetilde{R}_{I+N}$ COMPRISING INTERFERENCE SIGNAL COMPONENT

**15** RECEIVED SINR ESTIMATION UNIT

**16** RECEIVED SINR

CQI ← CQI GENERATION UNIT

**18** RI ESTIMATION UNIT

RI ←

PMI ← **19** PMI ESTIMATION UNIT

~**10**

EP 2 775 646 A1

# FIG. 2

START

RECEIVER ESTIMATES ($N_{RX} \times N_{TX}$) DIMENSIONAL CHANNEL MATRIX H BY USING CRS OR CSI-RS —S101

USE CHANNEL MATRIX H TO SELECT ($N_{TX} \times N_{STREAM}$) DIMENSIONAL TRANSMISSION WEIGHT MATRIX $W_{TX}$ FROM CODE BOOK —S102

USE CRS TO ESTIMATE COVARIANCE MATRIX $R_{I+N}$ (USE CRS TO ESTIMATE CHANNEL MATRIX H USED IN THE FOLLOWING EQUATION WHEN ESTIMATING COVARIANCE MATRIX) —S103

$$\tilde{r}(k,l) = r(k,l) - H_1(k,l)d_1(k,l) \quad -(4)$$

FROM ESTIMATED CHANNEL MATRIX H, COVARIANCE MATRIX $R_{I+N}$, AND SELECTED TRANSMISSION WEIGHT MATRIX $W_{TX}$, ESTIMATE ($N_{STREAM} \times N_{RX}$) DIMENSIONAL IRC RECEPTION WEIGHT $W_{IRC}$ —S104

$$W_{IRC} = (HW_{TX})^H R_{I+N}^{-1} \quad -(5)$$

FROM ESTIMATED CHANNEL MATRIX H, IRC RECEPTION WEIGHT $W_{IRC}$, AND SELECTED TRANSMISSION WEIGHT MATRIX $W_{TX}$, ESTIMATE RECEIVED SINR —S105

$$G = W_{IRC}HW_{TX}P_{N,n} = w_{IRC,n}(\tilde{R}_{I+N})w_{IRC,n}^H$$

□ THE NO. OF TRANSMISSION STREAMS = 1

$$SINR = |g(1,1)|^2/P_{N,1}$$

□ THE NO. OF TRANSMISSION STREAMS = N

$$SINR_n = |g(n,n)|^2/(P_{N,n} + \Sigma_{i \neq n}|g(n,i)|^2)$$

$$W_{IRC} = \begin{bmatrix} W_{IRC,1} \\ \vdots \\ W_{IRC,n} \\ \vdots \\ W_{IRC,Nstream} \end{bmatrix}$$

$W_{IRC,n}$: ($1 \times N_{RX}$) DIMENSIONAL IRC RECEPTION WEIGHT VECTOR

$$\tilde{R}_{I+N} = \frac{1}{N_{sp}} \sum_{k,l \in CRS} \tilde{r}(k,l)\tilde{r}(k,l)^H \quad -(5)$$

$-(6)$

CONVERT ESTIMATED RECEIVED SINR TO CQI THROUGH QUANTIZATION, ESTIMATE PMI AND RI

S106

END

$N_{TX}$ : THE NO. OF BASE STATION ANTENNAS
$N_{RX}$ : THE NO. OF RECEIVER ANTENNAS
$N_{STREAM}$ : THE NO. OF TRANSMISSION STREAMS
G(IJ): (IJ)TH ELEMENT IN MATRIX G]

# FIG. 3

START

RECEIVER ESTIMATES ($N_{RX} \times N_{TX}$) DIMENSIONAL CHANNEL MATRIX H BY USING CRS OR CSI-RS — S201

USE ESTIMATED CHANNEL ESTIMATED VALUE TO ESTIMATE ($N_{TX} \times N_{STREAM}$) DIMENSIONAL TRANSMISSION WEIGHT MATRIX $W_{TX}$
$$H = UDV^H \rightarrow W_{Tx} = V \quad -(3)$$
— S202

USE CRS TO ESTIMATE COVARIANCE MATRIX $R_{I+N}$ (USE CRS TO ESTIMATE CHANNEL MATRIX H USED IN THE FOLLOWING EQUATION WHEN ESTIMATING COVARIANCE MATRIX)
$$\tilde{r}(k,l) = r(k,l) - H_1(k,l)d_1(k,l) \quad -(4)$$
— S203

FROM ESTIMATED CHANNEL MATRIX H, COVARIANCE MATRIX $R_{I+N}$, AND SELECTED TRANSMISSION WEIGHT MATRIX $W_{TX}$, ESTIMATE ($N_{STREAM} \times N_{RX}$) DIMENSIONAL IRC RECEPTION WEIGHT $W_{IRC}$
$$W_{IRC} = (HW_{Tx})^H R_{I+N}^{-1} \quad -(5)$$
— S204

FROM ESTIMATED CHANNEL MATRIX H, IRC RECEPTION WEIGHT $W_{IRC}$, AND SELECTED TRANSMISSION WEIGHT MATRIX $W_{TX}$, ESTIMATE RECEIVED SINR

$$G = W_{IRC}HW_{Tx} \quad P_{N,n} = w_{IRC,n}(\tilde{R}_{I+N})w_{IRC,n}^H$$

□ THE NO. OF TRANSMISSION STREAMS = 1
$$SINR = |g(1,1)|^2/P_{N,1}$$

□ THE NO. OF TRANSMISSION STREAMS = N
$$SINR_n = |g(n,n)|^2/(P_{N,n} + \textstyle\sum_{i \neq n}|g(n,i)|^2)$$

$$W_{IRC} = \begin{bmatrix} w_{IRC,1} \\ \vdots \\ w_{IRC,n} \\ \vdots \\ w_{IRC,Nstream} \end{bmatrix} \quad \begin{matrix} w_{IRC,n}: (1 \times N_{RX}) \text{ DIMENSIONAL} \\ \text{IRC RECEPTION WEIGHT VECTOR} \\ \tilde{R}_{I+N} = \frac{1}{N_{sp}} \sum_{k,l \in CRS} \tilde{r}(k,l)\tilde{r}(k,l)^H \end{matrix} \quad -(6)$$

— S205

CONVERT ESTIMATED RECEIVED SINR TO CQI THROUGH QUANTIZATION, ESTIMATE RI
S206

END

$N_{TX}$ : THE NO. OF BASE STATION ANTENNAS
$N_{RX}$ : THE NO. OF RECEIVER ANTENNAS
$N_{STREAM}$ : THE NO. OF TRANSMISSION STREAMS
$G(IJ)$ : $(IJ)$TH ELEMENT IN MATRIX G]

EP 2 775 646 A1

# FIG. 4

CRS → **CHANNEL ESTIMATION UNIT** 11 — CHANNEL MATRIX H

CRI-RS → 17 **CHANNEL ESTIMATION UNIT** — COVARIANCE MATRIX ESTIMATION UNIT 12

10

CHANNEL MATRIX H

**TRANSMISSION WEIGHT MATRIX GENERATION UNIT** 13

COVARIANCE MATRIX $R_{I+N}$

14 **IRC RECEPTION WEIGHT ESTIMATION UNIT**

TRANSMISSION WEIGHT MATRIX $W_{TX}$

IR RECEPTION WEIGHT $W_{IRC}$

15 **RECEIVED SINR ESTIMATION UNIT**

COVARIANCE MATRIX $\tilde{R}_{I+N}$ COMPRISING INTERFERENCE SIGNAL COMPONENT

RECEIVED SINR

CQI ← 16 **CQI GENERATION UNIT**

RI ← 18 **RI ESTIMATION UNIT**

PMI ← 19 **PMI ESTIMATION UNIT**

EP 2 775 646 A1

10

# FIG. 5

PRECODING BEAM #1 ADDRESSED
TO UE #1 CONNECTED TO ANOTHER CELL

PRECODING BEAM #2 ADDRESSED
TO UE #2 CONNECTED TO ANOTHER CELL

INTERFERENCE SIGNAL TO IRC RECEIVER 10

eNB#1

UE#1

eNB#2

UE#2

DESIRED SIGNAL
TO IRC RECEIVER 10

10
IRC RECEIVER

FORM NULL TO INTERFERENCE SIGNAL

EP 2 775 646 A1

# FIG. 6

CRS

CRI-RS

DM-RS

DATA SIGNAL

CONTROL SIGNAL

FREQUENCY

RB BANDS (12 SUBCARRIERS)

1 SUBFRAME (14 OFDM SYMBOLS)

TIME

# FIG. 7

(a) $$W_{IRC}(k,\,l)=H_1^H(k,\,l)R_{I+N}^{-1}$$

(b) $$R_{I+N}=P_1 H_1(k,l)H_1^H(k,l)+\frac{1}{N_{sp}}\sum_{k,l\in CRS}\tilde{r}(k,l)\tilde{r}(k,l)^H \qquad \tilde{r}(k,l)=r(k,l)-H_1(k,l)d_1(k,l)$$

(c) $$\tilde{R}_{I+N}=\frac{1}{N_{sp}}\sum_{k,l\in CRS}\tilde{r}(k,l)\tilde{r}(k,l)^H$$

| | | |
|---|---|---|
| $k$ : SUBCARRIER INDEX | $H_1$ : CHANNEL MATRIX OF CONNECTED CELLS | $N_{SP}$: AVERAGED SAMPLE NUMBER |
| $l$ : OFDM SYMBOL INDEX | $r$ : RECEIVED SIGNAL VECTOR | $H$: HERMITIAN TRANSPOSITION |
| $W_{IRC}$: IRC RECEPTION WEIGHT | $d_1$ : RS SIGNAL VECTOR OF CONNECTED CELL | $P_1$ : TRANSMISSION POWER OF CONNECTED CELL |

EP 2 775 646 A1

# FIG. 8

START

USE CRS OR CSI-RS (CHANNEL STATE INFORMATION-RS) IN RECEIVER TO ESTIMATE ($N_{RX} \times N_{TX}$) DIMENSIONAL CHANNEL MATRIX H — S301

USE CHANNEL MATRIX H TO SELECT ($N_{TX} \times N_{STREAM}$) DIMENSIONAL TRANSMISSION WEIGHT MATRIX $W_{TX}$ FROM CODE BOOK — S302

USE THE ABOVE RS TO ESTIMATE INTERFERENCE NOISE POWER $\alpha^2$ — S303

FROM ESTIMATED CHANNEL MATRIX H, INTERFERENCE NOISE POWER $\alpha^2$, AND SELECTED TRANSMISSION WEIGHT MATRIX $W_{TX}$, ESTIMATE ($N_{STREAM} \times N_{RX}$) DIMENSIONAL MMSE RECEPTION WEIGHT $W_{MMSE}$

$$W_{MMSE} = (HW_{TX})^H ((HW_{TX})(HW_{TX})^H + \alpha^2 I)^{-1} \quad -(1)$$

— S304

FROM ESTIMATED CHANNEL MATRIX H, MMSE RECEPTION WEIGHT $W_{MMSE}$, AND SELECTED TRANSMISSION WEIGHT MATRIX $W_{TX}$, ESTIMATE RECEIVED SINR

$G = W_{MMSE}HW_{TX}$ , $P_{N,n} = w_{MMSE,n}(\alpha^2 I)w_{MMSE,n}^H$

☐ THE NO. OF TRANSMISSION STREAMS = 1

$SINR = |g(1,1)|^2 / P_{N,1}$

☐ THE NO. OF TRANSMISSION STREAMS = N

$SINR_n = |g(n,n)|^2 / (P_{N,n} + \Sigma_{i \neq n} |g(n,i)|^2)$

$$W_{MMSE} = \begin{bmatrix} W_{MMSE,1} \\ \vdots \\ W_{MMSE,n} \\ \vdots \\ W_{MMSE,Nstream} \end{bmatrix}$$

$W_{MMSE,n}$: ($1 \times N_{RX}$) DIMENSIONAL ORIGINAL MMCE RECEPTION WEIGHT VECTOR — (2)

I: ($N_{RX} \times N_{RX}$) DIMENSIONAL UNIT MATRIX

— S305

CONVERT ESTIMATED RECEIVED SINR TO CQI THROUGH QUANTIZATION, ESTIMATE PMI AND RI

S306

END

$N_{TX}$ : THE NO. OF BASE STATION ANTENNAS
$N_{RX}$ : THE NO. OF RECEIVER ANTENNAS
$N_{STREAM}$ : THE NO. OF TRANSMISSION STREAMS
G(IJ): (IJ)TH ELEMENT IN MATRIX G]

EP 2 775 646 A1

## FIG. 9

$\text{START}$

S401 — RECEIVER ESTIMATES ($N_{RX} \times N_{TX}$) DIMENSIONAL CHANNEL MATRIX H BY USING CRS OR CSI-RS

S402 — USE CHANNEL MATRIX H TO ESTIMATE ($N_{TX} \times N_{STREAM}$) DIMENSIONAL TRANSMISSION WEIGHT MATRIX $W_{TX}$

$$H = UDV^H \rightarrow W_{TX} = V \qquad \text{-(3)}$$

S403 — USE THE ABOVE RS TO ESTIMATE INTERFERENCE NOISE POWER $\alpha^2$

S404 — FROM ESTIMATED CHANNEL MATRIX H, INTERFERENCE NOISE POWER $\alpha^2$, AND SELECTED TRANSMISSION WEIGHT MATRIX $W_{TX}$, ESTIMATE ($N_{STREAM} \times N_{RX}$) DIMENSIONAL MMSE RECEPTION WEIGHT $W_{MMSE}$

$$W_{MMSE} = (HW_{TX})^H ((HW_{TX})(HW_{TX})^H + \alpha^2 I)^{-1}$$

S405 — FROM ESTIMATED CHANNEL MATRIX H, MMSE RECEPTION WEIGHT $W_{MMSE}$, AND SELECTED TRANSMISSION WEIGHT MATRIX $W_{TX}$, ESTIMATE RECEIVED SINR

$$G = W_{MMSE}HW_{TX}, P_{N,n} = w_{MMSE,n}(\alpha^2 I)w_{MMSE,n}^H$$

□ THE NO. OF TRANSMISSION STREAMS = 1

$$SINR = |g(1,1)|^2 / P_{N,1}$$

□ THE NO. OF TRANSMISSION STREAMS = N

$$SINR_n = |g(n,n)|^2 / (P_{N,n} + \Sigma_{i \neq n} |g(n,i)|^2)$$

$$W_{MMSE} = \begin{bmatrix} W_{MMSE,1} \\ \vdots \\ W_{MMSE,n} \\ \vdots \\ W_{MMSE,Nstream} \end{bmatrix}$$

$W_{MMSE,n}$: ($1 \times N_{RX}$) DIMENSIONAL ORIGINAL MMCE RECEPTION WEIGHT VECTOR }-(2)

I: ($N_{RX} \times N_{RX}$) DIMENSIONAL UNIT MATRIX

S406 — CONVERT ESTIMATED RECEIVED SINR TO CQI THROUGH QUANTIZATION, ESTIMATE RI

$\text{END}$

$N_{TX}$ : THE NO. OF BASE STATION ANTENNAS
$N_{RX}$ : THE NO. OF RECEIVER ANTENNAS
$N_{STREAM}$ : THE NO. OF TRANSMISSION STREAMS
G(IJ): (IJ)TH ELEMENT IN MATRIX G]

## INTERNATIONAL SEARCH REPORT

| | International application No. |
|---|---|
| | PCT/JP2012/078468 |

A. CLASSIFICATION OF SUBJECT MATTER
*H04J99/00*(2009.01)i, *H04B7/04*(2006.01)i

According to International Patent Classification (IPC) or to both national classification and IPC

B. FIELDS SEARCHED

Minimum documentation searched (classification system followed by classification symbols)
H04J99/00, H04B7/04

Documentation searched other than minimum documentation to the extent that such documents are included in the fields searched

| | | | |
|---|---|---|---|
| Jitsuyo Shinan Koho | 1922–1996 | Jitsuyo Shinan Toroku Koho | 1996–2012 |
| Kokai Jitsuyo Shinan Koho | 1971–2012 | Toroku Jitsuyo Shinan Koho | 1994–2012 |

Electronic data base consulted during the international search (name of data base and, where practicable, search terms used)
IEEE Xplore, CiNii

C. DOCUMENTS CONSIDERED TO BE RELEVANT

| Category* | Citation of document, with indication, where appropriate, of the relevant passages | Relevant to claim No. |
|---|---|---|
| A | JP 2006-319959 A (Matsushita Electric Industrial Co., Ltd.), 24 November 2006 (24.11.2006), paragraph [0269] & JP 2011-229171 A  & US 2009/0279486 A1 & WO 2006/109786 A1  & CN 101156335 A & CN 102571177 A | 1-3 |
| A | JP 2004-248075 A (NTT Docomo Inc.), 02 September 2004 (02.09.2004), paragraphs [0074] to [0078] (Family: none) | 1-3 |
| A | Renesas Mobile Europe Ltd., Interference aware receiver modeling at system level, 3GPP TSG-RAN WG1#65, R1-111562, 2011.05.09 | 1-3 |

☒ Further documents are listed in the continuation of Box C.      ☐ See patent family annex.

| | |
|---|---|
| *    Special categories of cited documents:<br>"A"  document defining the general state of the art which is not considered to be of particular relevance<br>"E"  earlier application or patent but published on or after the international filing date<br>"L"  document which may throw doubts on priority claim(s) or which is cited to establish the publication date of another citation or other special reason (as specified)<br>"O"  document referring to an oral disclosure, use, exhibition or other means<br>"P"  document published prior to the international filing date but later than the priority date claimed | "T"  later document published after the international filing date or priority date and not in conflict with the application but cited to understand the principle or theory underlying the invention<br>"X"  document of particular relevance; the claimed invention cannot be considered novel or cannot be considered to involve an inventive step when the document is taken alone<br>"Y"  document of particular relevance; the claimed invention cannot be considered to involve an inventive step when the document is combined with one or more other such documents, such combination being obvious to a person skilled in the art<br>"&"  document member of the same patent family |

| Date of the actual completion of the international search | Date of mailing of the international search report |
|---|---|
| 06 December, 2012 (06.12.12) | 18 December, 2012 (18.12.12) |

| Name and mailing address of the ISA/<br>    Japanese Patent Office | Authorized officer |
|---|---|
| Facsimile No. | Telephone No. |

Form PCT/ISA/210 (second sheet) (July 2009)

**INTERNATIONAL SEARCH REPORT**

International application No.

PCT/JP2012/078468

C (Continuation). DOCUMENTS CONSIDERED TO BE RELEVANT

| Category* | Citation of document, with indication, where appropriate, of the relevant passages | Relevant to claim No. |
|---|---|---|
| A | NTT DOCOMO, Reference receiver structure for interference mitigation on Enhanced performance requirement for LTE UE, 3GPP TSG-RAN WG4#60Bis, R4-115213, 2011.10.10 | 1-3 |
| A | NTT DOCOMO, Influence of Channel Estimation Error on MMSE-IRC Receiver, 3GPP TSG-RAN WG1#65, R1-111639, 2011.05.09 | 1-3 |
| A | Yusuke OWATARI, Nobuhiko MIKI, Takahiro ASAI, Tetsushi ABE, Hidekazu TAOKA, "Investigation of Interference Rejection Combining Receiver to Suppress Inter-cell Interference in LTE-Advanced Downlink", IEICE Technical Report, 14 July 2011 (14.07.2011), RCS2011-80 | 1-3 |
| A | Yusuke OWATARI, Nobuhiko MIKI, Tetsushi ABE, Hidekazu TAOKA, "Investigation on Interference Rejection Combining Receiver in Asynchronous Network for LTE-Advanced Downlink", IEICE Technical Report, 19 October 2011 (19.10.2011), RCS2011-186 | 1-3 |
| A | Yusuke Ohwatari, Nobihiko Miki, Takahiro Asai, Tetsushi Abe, Hidekazu Taoka, Performance of Advanced Receiver Employing Interference Rejection Combining to Suppress Inter-Cell Interference in LTE-Advanced Downlink, Vehicular Technology Conference (VTC Fall), 2011 IEEE, 2011.09.05 | 1-3 |

Form PCT/ISA/210 (continuation of second sheet) (July 2009)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011242910 A